# FASCICULE DE BREVET EUROPEEN

(11) **EP 1 256 904 B1**
(45) Date de publication et mention de la délivrance du brevet: **15.11.2006**
(21) Numéro de dépôt: 02290899.0
(22) Date de dépôt: 10.04.2002
(51) Int. Cl.: G06K 19/07, G06K 7/00, G06K 7/10, G06K 7/08

(54) **Carte et lecteur sans contacts à deux niveaux de sécurité physique de communication**
Kontaktlose Karte und Leser, zwei physische Kommunikationssicherheitsstufen
Non contact card and reader, two levels of physical security for communication

(30) Priorité: 07.05.2001 FR 0106119
(43) Date de publication de la demande: 13.11.2002
(73) Titulaire: Serbanescu, Dan, 93130 Noisy-le-Sec (FR)
(72) Inventeur: Serbanescu, Dan, 93130 Noisy-le-Sec (FR)
(74) Mandataire: de Roquemaurel, Bruno

(56) Documents cités:
- FR-A- 2 679 670
- US-A- 5 648 761

## Description

L'invention concerne les cartes dites à puces, et plus spécifiquement, les cartes sans contacts.

On connaît les systèmes de communications électromagnétiques de lecture-écriture pour les cartes sans contacts ; la norme IEC 14443 (modes A et B) décrit le fonctionnement de ces dispositifs ; en résumé, la carte, comme le lecteur, présente une antenne ayant la forme d'une bobine plane, et la communication entre la carte et le lecteur s'effectue par couplage électromagnétique entre les antennes. Les systèmes basés sur cette norme se prêtent bien à des applications où la transaction doit se passer vite, sur simple présentation de la carte, à une certaine distance de lecteur, de l'ordre de 5 à 20 cm. La distance maximale est déterminée par la puissance d'émission du lecteur, par la taille de l'antenne-cadre du lecteur, et par la sensibilité du récepteur du lecteur.

Les applications typiques sont les titres de transport en commun, les entrées au cinéma ou aux spectacles, le payement en parkings, les systèmes d'accès et autres ; d'une façon générale le «porte-monnaie électronique », c'est-à-dire une carte chargée à la banque d'une somme d'argent, pas très importante, qui est consommée dans les endroits cités.

Pour des opérations bancaires typiques, avec des sommes plus importantes et donnant l'accès aux comptes bancaires du porteur, la carte sans contacts est considérée comme inadéquate, car son niveau de sécurité physique est insuffisant pour deux raisons :
- la distance maximale de communication avec la carte sans contacts actuelle peut atteindre des valeurs assez importantes, de l'ordre du mètre, voire plus, en mettant en jeu des puissances fortes d'émission et utilisant des antennes-cadres de grandes dimensions. On peut donc imaginer comme possible une action malveillante de lecture ou même d'écriture sur la carte et qui peut avoir lieu sans que le porteur ne se rende compte. On suppose que le fraudeur qui opère cette intrusion maîtrise les protocoles de communication et les éventuels principes de cryptage ; malheureusement cette possibilité ne peut pas être exclue aujourd'hui;
- pendant une transaction normale lecteur-carte conformément à la norme actuelle, la communication entre les deux correspondants peut être interceptée et enregistrée par des moyens radio relativement simples, à des distances de dizaines de mètres. Il est facile d'imaginer que le secret des transactions est ainsi compromis.

Ces deux problèmes d'intrusion et d'interception proviennent du fait que le couplage électromagnétique lecteur-carte actuel a été conçu volontairement d'une façon «ouverte » pour assurer des transactions rapides à distances moyennes.

FR-A-2 679 670 décrit un système de communication bilatérale sans contacts pour les cartes de crédit à microprocesseur. Le système repose sur l'utilisation dans le lecteur comme dans la carte de deux bobines planes identiques voisines. L'alimentation, les données et l'horloge pour la carte sont transmises en modulant en opposition de phase les amplitudes des signaux de radiofréquence appliqués aux deux bobines. Au-delà d'une certaine distance par rapport au lecteur, la somme des signaux émis par les deux bobines est une porteuse pure, les deux modulations s'annulent, et ne sont plus perceptibles. En revanche, lorsque les deux bobines de la carte sont proches des deux bobines du lecteur, dans une position de lecture, chaque bobine de la carte est couplée à une bobine du lecteur, et le couplage croisé entre les bobines est négligeable. Dans ce cas, il est possible de lire les signaux couplés dans les bobines de la carte, en redressant les signaux de chaque bobine et en sommant les signaux. Le principe de communication est appelé dans ce document «modulation d'espace limité » ou modulation différentielle, et constitue un ensemble «clos ». Si la distance carte lecteur dépasse 20 cm l'intrusion est impossible. Comme la modulation différentielle utilisée est théoriquement insaisissable à des distances supérieures à quelques fois la taille des antennes-cadres du lecteur, l'interception distante de la transaction est cent à mille fois plus difficile que pour le système ouvert actuel, donc pratiquement impossible.

Ce système présente l'inconvénient que la carte doit être présentée dans une position relativement déterminée par rapport au lecteur, pour assurer un couplage entre les bobines respectives du lecteur et de la carte. En outre, la distance de communication est plus faible que.celle du système ouvert décrit précédemment.

L'invention a pour objet de résoudre ces différents problèmes. Par rapport à un système ouvert, elle permet de sécuriser des communications entre la carte et le lecteur, en empêchant les intrusions et les interceptions. Par rapport à un système fermé, l'invention rend possible une communication entre la carte et le lecteur à des distances plus importantes, avec une position moins déterminée de la carte par rapport au lecteur.

Plus spécifiquement, l'invention propose un lecteur de carte sans contacts, selon la revendication 1.

Dans un mode de réalisation, la modulation est une modulation à deux états, et les antennes sont modulées suivant des états distincts dans le premier mode et suivant le même état dans le deuxième mode.

La modulation peut être une modulation d'amplitude, ou encore une modulation de phase.

Dans un mode de réalisation, les antennes sont identiques. Elles peuvent notamment être planes et coplanaires.

L'invention concerne aussi une carte à circuit intégré pour lecture sans contact, selon la revendication 7.

Dans un mode de réalisation, le circuit de démodulation comprend pour chaque antenne un démodulateur d'amplitude, de préférence une diode.

Dans un autre mode de réalisation, le circuit de démodulation comprend pour chaque antenne un démodulateur de phase.

Il est avantageux que les antennes soient identiques. Elles peuvent notamment être planes et coplanaires.

L'invention propose encore un système de communication sans contact, selon la revendication 12. Il est alors avantageux que les antennes de la carte présentent une structure identique à celle des antennes du lecteur.

L'invention propose aussi un procédé de communication sans contact à l'aide de deux antennes, selon la revendication 14

De préférence, la modulation est une modulation à deux états, et les antennes sont modulées suivant des états distincts dans le premier mode et suivant le même état dans le deuxième mode.

La modulation peut être une modulation d'amplitude, ou une modulation de phase.

L'invention propose enfin un procédé de réception de signaux modulés à l'aide de deux antennes selon la revendication 18.

D'autres caractéristiques et avantages de l'invention apparaîtront à la lecture de la description détaillée qui suit de modes de réalisation de l'invention, donnés à titre d'exemple uniquement, et en référence aux dessins annexés, qui montrent :
- figure 1, une représentation schématique du système de couplage selon la norme IEC 14443;
- figure 2, une représentation schématique d'un système de couplage selon FR-A-2 679 670 ;
- figure 3, une représentation schématique des champs magnétiques dans le mode de fonctionnement distant du système de la figure 2 ;
- figure 4, une représentation schématique des champs magnétiques dans le mode de fonctionnement proche du système de la figure 2;
- figure 5, un schéma synoptique d'un lecteur et d'une carte selon l'invention, ainsi que d'un circuit d'écoute, montrant une communication dans le sens lecteur vers carte ;
- figure 6, des chronogrammes des signaux dans le lecteur, dans la carte et dans le circuit d'écoute de la figure 5, pour les deux modes de fonctionnement des figures 3 et 4;
- figure 7, un schéma similaire à celui de la figure 5, mais montrant la communication dans le sens carte vers lecteur.

L'invention propose un système de lecteur et de carte sans contact, qui peut être utilisé soit dans un mode distant, suivant la norme IEC 14443, soit dans un mode proche ou d'espace limité. Dans le mode distant, le système présente les avantages d'un système ouvert, c'est-à-dire une communication facile à mettre en oeuvre, sans nécessiter de positionnement précis de la carte par rapport au lecteur. Dans le mode proche ou d'espace limité, le système assure une grande sécurité des communications, en évitant l'interception ou l'intrusion.

L'invention permet d'utiliser un seul type de carte, pour des applications à des degrés de sécurité divers. Le système est totalement compatible avec les cartes et les lecteurs actuels, conformes à la norme IEC 14443 : les cartes de l'invention sont lues par les lecteurs déjà existants, en mode normal, non-sécurisé. Inversement, les cartes actuelles conformes à la norme IEC 14443 peuvent être utilisées avec un lecteur selon l'invention, en mode distant.

L'invention propose d'utiliser comme dans FR-A-2 679 670 un lecteur présentant deux antennes voisines, et une carte présentant deux antennes voisines. En mode distant, les deux antennes sont excitées par des signaux identiques, et constituent, du point de vue de la carte, une antenne unique équivalente à l'antenne d'un lecteur selon la norme IEC 14443. Dans ce cas, il suffit pour lire les signaux dans la carte de sommer les signaux reçus sur les deux antennes de la carte. On comprend aussi bien que dans ce mode de fonctionnement du lecteur, il est possible de communiquer avec le lecteur à l'aide d'une carte selon la norme IEC 14443, ne présentant qu'une seule antenne.

En mode proche, les deux antennes du lecteur sont excitées par des signaux modulés en opposition de phase. Pour lire les données transmises vers la carte dans ce cas, il suffit de faire la différence des enveloppes des signaux reçus sur les deux antennes de la carte. Au-delà d'une certaine distance, les deux signaux seront aperçus comme un seul signal de radiofréquence non-modulé et l'information émise à distance est effacée. Dans ce mode de fonctionnement, on assure comme dans FR-A-2 679 670 une communication difficile à intercepter et rendant l'intrusion quasiment impossible.

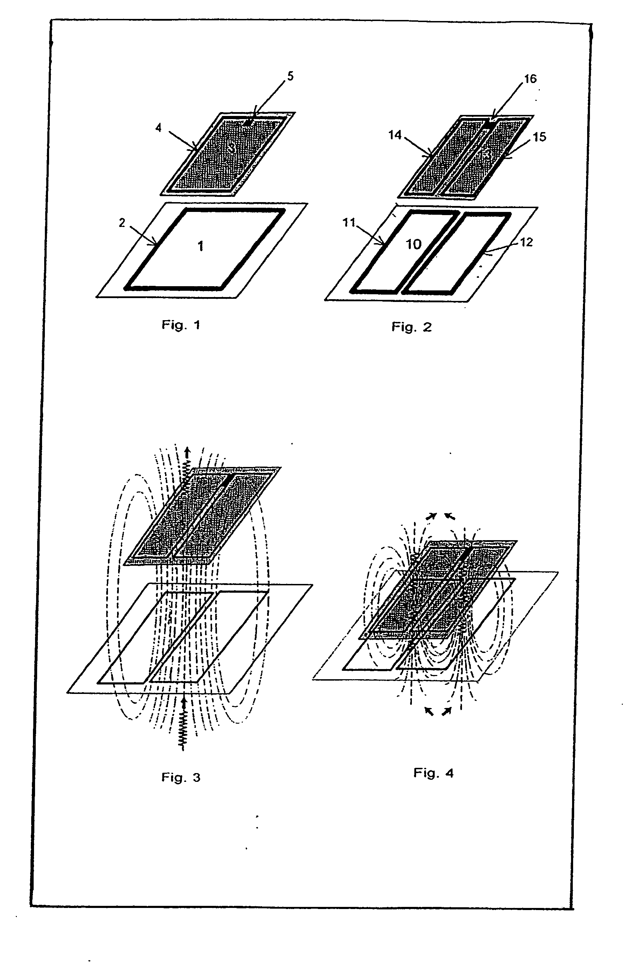

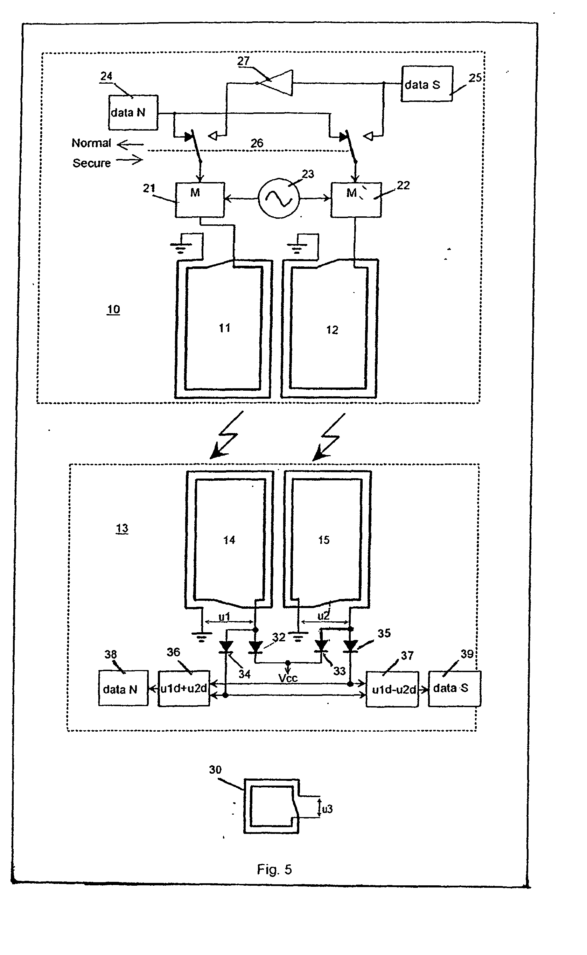

A la figure 1 est représenté schématiquement le système standard (norme 14443) de couplage: le lecteur 1 rayonne par l'antenne-cadre 2 de l'énergie électromagnétique ; la carte 3 comporte une antenne-cadre 4 qui capte par couplage mutuel une partie de cette énergie qui est redressée pour alimenter le circuit intégré 5 de la carte. Ne sont pas représentés à la figure 1 les circuits de contrôle du lecteur et de récupération d'énergie dans l'antenne, dont un exemple est donné à la figure 5. La transmission des données du lecteur vers la carte est par une modulation d'amplitude de l'onde émise qui est détectée et les données sont traitées par la carte. Pour recevoir les données de réponse de la carte, le lecteur émet une onde continue, non-modulée. La carte répond par une modulation «de charge » : les données à émettre modifient l'impédance du circuit accordé qui comporte l'antenne 3. Les variations de l'impédance du circuit de la carte vont modifier, d'une valeur réduite, mais détectable, l'amplitude de la porteuse aux bornes de l'antenne 2 du lecteur. Les échanges des transmissions dans les deux sens se déroulent alternativement, conformément à un protocole approprié.

A la figure 2 est représenté schématiquement un système selon FR-A-2 679 670. Le lecteur 10 comporte deux antennes 11 et 12 ; dans l'exemple, il s'agit de deux antennes-cadres, identiques et voisines, dont la somme des surfaces est égale à la surface de l'antenne standard 2 du système de la figure 1 ; de nouveau, on n'a pas porté à la figure les circuits de contrôle du lecteur et récupération d'énergie dans les antennes 11 et 13 ; on pourra encore consulter la figure 5 plus bas. La carte 13 comporte comme le lecteur deux antennes 14 et 15, qui sont reliées à un circuit intégré 16. La configuration des antennes de la carte est dans l'exemple similaire à celle du lecteur, et les deux antennes sont des antennes-cadres identiques et voisines.

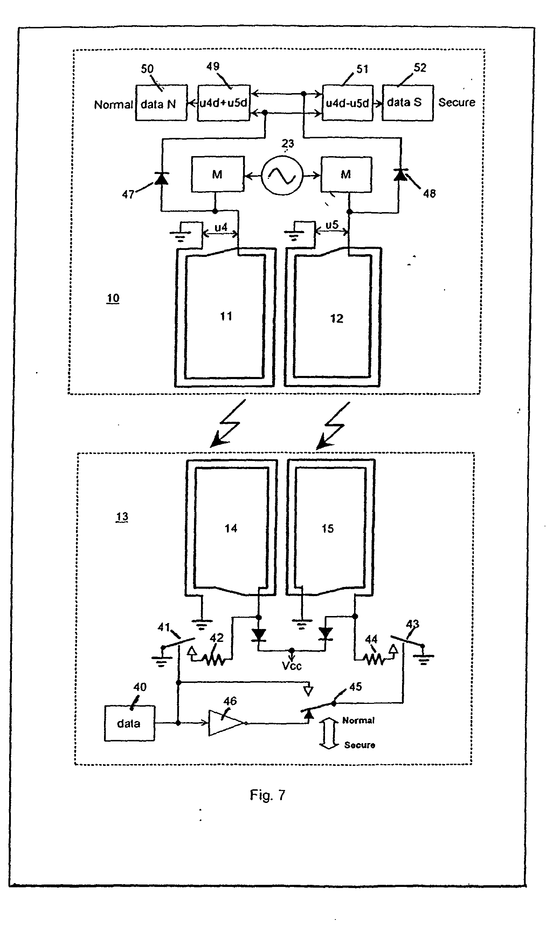

Les figures 3 et 4 montrent schématiquement les champs magnétiques dans les modes de fonctionnement distant et proche du système de la figure 2. On décrit dans la suite en référence aux figures 3 à 6 le fonctionnement du système de l'invention pour la communication dans le sens lecteur vers carte ; dans le sens carte vers lecteur, le fonctionnement est similaire et est décrit en référence à la figure 7.

Comme le montre la figure 3, en mode distant, les antennes du lecteur sont excitées de sorte à ce que les signaux respectivement émis par les antennes, en s'éloignant du lecteur, subissent une interférence constructrice. Dans le mode de réalisation proposé, ceci est simplement assuré par une excitation des deux antennes avec le même signal de porteuse et des modulations identiques - ce que l'on peut appeler en mode commun ; on suppose ici que les antennes sont enroulées dans le même sens. Dans ce cas, les antennes de la carte reçoivent aussi des signaux identiques. L'information transmise par le lecteur est obtenue par la somme des enveloppes des deux signaux reçus. La distance d'action dépend de la puissance d'émission et de la taille des antennes du lecteur.

Dans ce mode distant, le champ perçu par la carte est identique au champ perçu par la carte dans un lecteur du genre de celui de la figure 1. De ce fait, l'orientation de la carte n'est pas cruciale, et la carte pourrait ainsi être tournée dans son plan sans incidence sur le signal reçu. Pour une communication dans le sens carte vers lecteur, il suffit comme décrit en référence à la figure 1 de procéder à une modulation de charge sur les deux antennes de la carte. On peut aussi utiliser dans ce mode distant une carte du genre représenté à la figure 1, tant pour la réception des signaux par la carte que pour la transmission des signaux vers le lecteur.

La figure 4 montre les champs en mode proche du système. Dans ce mode proche, les antennes du lecteur sont excitées de sorte à ce que les signaux respectivement émis par les antennes, en s'éloignant du lecteur, subissent une interférence destructrice. Dans le mode de réalisation proposé, ceci est simplement assuré par une excitation des deux antennes avec le même signal de porteuse et des modulations complémentaires - ce que l'on peut appeler mode différentiel ; comme les antennes sont identiques, l'amplitude des signaux appliqués à chacune des antennes est identique. De la sorte, lorsque l'on s'éloigne du lecteur, les modulations appliquées aux signaux respectifs s'annulent, et seule la porteuse est perçue. L'affaiblissement de la modulation dépend de la taille des antennes, et en pratique, les données sont insaisissables à une distance du lecteur supérieure à quelques fois la taille des antennes. L'interception des signaux émis par le lecteur est donc très difficile, pratiquement impossible, dès lors que l'on s'éloigne du lecteur.

Lorsque la carte 13 est proche du lecteur 10, dans une position correcte, les antennes 14 et 15 de la carte sont respectivement couplées aux antennes 11 et 12 du lecteur ; pour une distance entre la carte et le lecteur inférieure à quelques fois la taille des antennes du lecteur, de préférence inférieure à la taille des antennes du lecteur le couplage croisé d'une antenne 14 (respectivement 15) de la carte avec l'antenne 11 (respectivement 12) du lecteur est faible. Ceci est assuré par le fait que les antennes de la carte présentent une structure similaire à celles du lecteur ; Cette condition est suffisante, mais elle n'est pas nécessaire, et l'on pourrait disposer les antennes du lecteur d'une façon différente des antennes de la carte.

Dans ce cas, chaque antenne de la carte reçoit les signaux émis par l'antenne du lecteur avec laquelle elle est couplée ; on peut appliquer dans la carte un traitement inverse de celui qui est appliqué dans le lecteur pour lire les informations transmises. Dans l'exemple d'une excitation des deux antennes du lecteur avec le même signal de porteuse et des modulations complémentaires, les antennes de la carte reçoivent des signaux différents, complémentaires. L'information transmise est obtenue par la différence des enveloppes des signaux reçus.

Dans le mode proche, la position de la carte est plus importante que dans le mode distant ; en effet, chaque antenne de la carte est couplée plus fortement avec une antenne correspondante du lecteur. Dans l'exemple de la figure, on pourrait tourner la carte dans son plan de 180°, sans incidence sur le fonctionnement ; toutefois, si l'on tournait la carte de 90° dans son plan, on n'assurerait pas un couplage privilégie de chaque antenne de la carte avec une antenne du lecteur. En pratique, on arrive à lire sans erreurs les signaux transmis depuis le lecteur vers la carte lorsque le couplage d'une antenne de la carte avec une antenne du lecteur est d'au moins environ 10 % plus important que le couplage de cette antenne de la carte avec l'autre antenne du lecteur. Cette valeur permet une marge d'erreur dans le positionnement de la carte en mode proche. En pratique, le positionnement relatif lecteur-carte peut facilement être obtenu dès que la carte est posée dans une cavité ou dans une fente du lecteur ; un guidage mécanique de la carte permet la communication.

Pour une communication dans le sens carte vers lecteur, on procède comme précédemment à une modulation de charge de l'une ou des deux antennes de la carte. La modulation de charge est détectée dans l'une ou dans les deux antennes du lecteur.

Pour ce qui concerne la sécurité de la communication à l'intrusion et à l'écoute, on peut apprécier que le mode commun de fonctionnement de la figure 3 soit un mode relativement ouvert, de sécurité médiocre. Le mode différentiel de la figure 4 est un mode fermé, de haute sécurité : il est impossible de créer un champ différentiel à des distances beaucoup plus grandes que la taille de la carte, donc l'intrusion distante est exclue; l'écoute distante est pratiquement impossible car les interférences entre les signaux émis par les antennes rendent la lecture impossible. Dans le cas de modulations complémentaires, les enveloppes de modulation sont perçues comme une valeur constante, sans information, dès que l'on s'éloigne du lecteur.

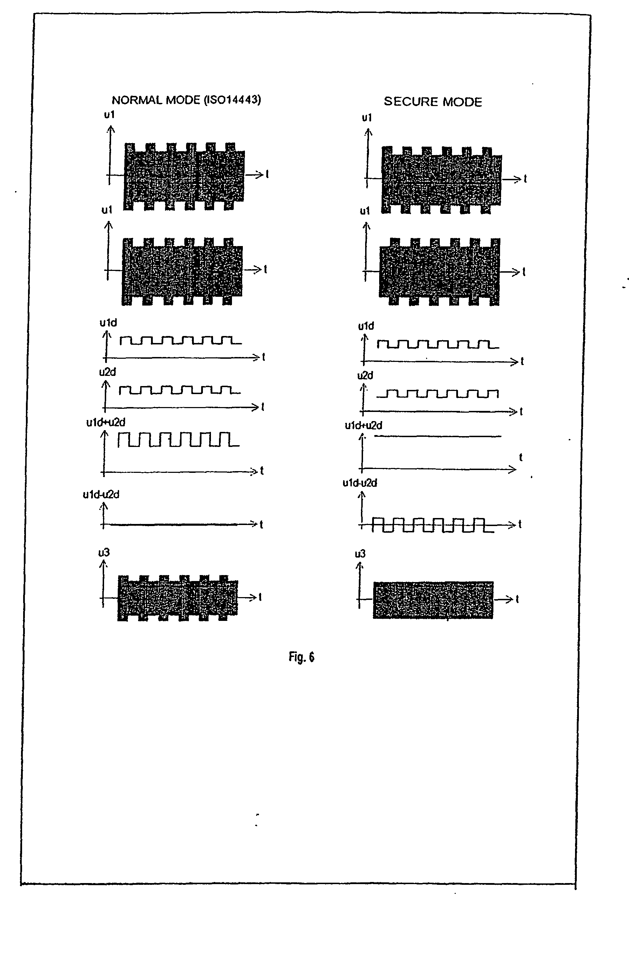

La figure 5 montre un schéma synoptique d'un lecteur et d'une carte selon l'invention, ainsi que d'un circuit d'écoute distant. Dans le mode de réalisation, on considère de nouveau des antennes identiques, et une modulation complémentaire d'une même porteuse dans les deux antennes en mode proche. La modulation est une modulation d'amplitude. Les différentes formes des signaux électriques sont présentées à la figure 6 sous forme de chronogrammes. La figure 5 montre les circuits permettant une communication du lecteur vers la carte. On note sur la figure "mode normal" le mode distant, et "mode secure" le mode proche.

Le lecteur 10 comporte deux antennes 11 et 12, dans l'exemple des bobines de couplage, qui sont respectivement excitées par les modulateurs d'amplitude 21 et 22. Un signal de porteuse de radiofréquence de 13,56 MHz est fourni à chacun des modulateurs d'amplitude par l'oscillateur 23. Les signaux de modulation proviennent soit de la source de données de sécurité normale 24 pour une transmission en mode distant, soit de la source de données de haute sécurité 25 pour une transmission en mode proche. Le choix est fait par le commutateur 26. Spécifiquement, le commutateur 26 est un commutateur double ; dans la position de ce commutateur représentée en gras sur la figure et correspondant au mode distant, la sortie de la source de données de sécurité normale 24 est appliquée à chacun des modulateurs d'amplitude 21 et 22. Dans l'autre position du commutateur, représentée en traits pointillés sur la figure et correspondant au mode proche, la sortie de la source de données de haute sécurité 25 est appliquée directement à l'un des modulateurs d'amplitude 22, et est appliquée à l'autre modulateur d'amplitude à travers un inverseur 27.

La carte 13 présente deux antennes 14 et 15. Les signaux de sortie des antennes sont appliqués d'une part à deux diodes 32 et 33. Les bornes de sortie des deux diodes fournissent une tension Vcc d'alimentation du circuit intégré 16 de la carte. Par ailleurs, les signaux de sortie des antennes sont appliqués à des diodes 34 et 35 qui détectent respectivement les enveloppes de modulation des signaux reçus sur les antennes 14 et 15. Chaque diode agit donc comme démodulateur pour les signaux modulés en amplitude reçus sur l'antenne à laquelle elle est connectée. Les signaux fournis par les deux diodes 34 et 35 sont appliqués d'une part à un étage sommateur 36 et d'autre part à un étage soustracteur 37. L'étage sommateur 36 somme les signaux d'enveloppe fournis par les diodes 34 et 35, et fournit à un étage de collection ou mémoire 38 un signal représentatif des données reçues par la carte en mode distant du lecteur. L'étage soustracteur 37 soustrait aux signaux d'enveloppe d'une des antennes les signaux d'enveloppe de l'autre antenne et fournit à un étage de collection ou mémoire 39 un signal représentatif des données reçues par la carte en mode proche du lecteur.

La figure 5 montre encore schématiquement un circuit d'écoute distant 30, qui est simplement constitué d'une boucle à une distance du lecteur de l'ordre de quelques fois la taille des antennes 11 et 12. La tension mesurée aux bornes du circuit d'écoute est notée u3 sur la figure 6.

La figure 6 montre les chronogrammes correspondant au fonctionnement du système de la figure 5, en mode distant sur la partie gauche de la figure, et en mode proche sur la partie droite de la figure. On note respectivement
- u1 et u2 les tensions aux bornes des antennes 14 et 15 ;
- u1d et u2d les tensions en sortie des diodes 34 et 35 ;
- u1d+u2d la somme des tensions uld et u2d ;
- u1d-u2d la différence des tensions u1d et u2d.

Dans l'exemple des figures 5 et 6, la modulation est une modulation d'amplitude d'une même porteuse. L'exemple de la figure 6 correspond à une modulation d'amplitude et à un train de bits présentant alternativement des valeurs de 0 et 1. En mode distant, comme représenté sur la partie gauche de la figure 6, les tensions u1 et u2 reçues par les antennes 14 et 15 de la carte - qui correspondent aux signaux appliqués aux antennes 11 et 12 du lecteur - sont donc identiques ; les enveloppes u1d et u2d de ces signaux sont aussi identiques. De la sorte, la somme u1d+u2d est un signal d'allure identique aux signaux u1 et u2, tandis que la différence u1d-u2d est nulle. Les antennes excitées en phase créent un champ équivalent à une antenne de surface double, champ qui est perçu par le circuit 30, comme le montre la tension u3 de la figure 6.

En mode proche, comme représenté sur la partie droite de la figure 6, les tensions u11 et u12 sont modulées de façon complémentaire - autrement dit, la modulation d'amplitude présente à tout instant des valeurs opposées. Les tensions u1 et u2 sont aussi complémentaires, de même que leurs enveloppes. La somme u1d+u2d est une tension constante, correspondant à l'enveloppe de la porteuse de la modulation. La différence u1d-u2d est une tension correspondant aux signaux à transmettre. A distance du lecteur, les signaux émis par les antennes 11 et 12 interfèrent de façon destructrice, et la tension u3 est constante. En d'autres termes, l'interférence entre les signaux émis par les deux antennes a pour effet d'annuler les modulations, et seule la porteuse reste perceptible. Ceci montre que l'interception en mode proche est difficile, voire impossible.

Le passage d'un mode de fonctionnement à l'autre dans le lecteur ne nécessite que de commuter le commutateur 26 dans la position distante ou la position proche. En mode proche, le commutateur 26 va passer dans la position représentée en pointillés et les données de la source 25 vont arriver en phase au modulateur 22 et, grâce à l'inverseur 27, en phase opposée au modulateur 21. Les enveloppes de modulation seront complémentaires. Dans la carte, les signaux détectés u1d et u2d sont aussi complémentaires. Leur somme est nulle, donc la mémoire 38 ne va pas recevoir de données. En revanche, la soustraction des signaux complémentaires effectuée par l'étage soustracteur 37 fournit dans ce cas des données de haute sécurité à la mémoire 39.

Inversement, en mode distant, le commutateur 26 va passer dans la position représentée en gras sur la figure 1, et les données de la source 24 vont arriver en phase au modulateur 22 et au modulateur 21. Les enveloppes de modulation seront identiques. Dans la carte, les signaux détectés u1d et u2d sont aussi identiques. Leur différence est nulle, donc la mémoire 39 ne va pas recevoir de données. En revanche, l'addition des signaux identiques effectuée par l'étage de sommation 36 fournit dans ce cas des données de sécurité normale à la mémoire 38.

La carte reconnaît le mode de fonctionnement, normal ou de haute sécurité, par la comparaison des valeurs des signaux alternatifs détectés somme (u1d+u2d) et différence (u1d-u2d) : si la somme est plus grande que la différence, la carte comprend que le lecteur fonctionne en mode distant ; inversement, si la différence est supérieure à la somme, la carte comprend que le lecteur fonctionne en mode distant.

Outre la protection contre l'interception, le système permet de protéger contre l'intrusion. En effet, il n'est pas possible d'envoyer des données de haute sécurité vers la carte, car il est impossible de créer à distance des champs distincts et complémentaires vers les deux antennes cadre de la carte à partir d'un dispositif distant du lecteur.

Pour une communication de la carte vers le lecteur, on procède comme dans l'état de la technique à une modulation de charge dans les antennes de la carte. La modulation de charge est la technologie indiquée par la norme ISO14443.

La figure 7 montre un schéma synoptique d'un lecteur et d'une carte selon l'invention, en mettant en évidence les éléments électriques qui assurent la transmission des données de la carte vers le lecteur en deux modes de transmission : en mode compatible avec la norme ISO14443 ou en mode de haute sécurité.

Dans le mode de réalisation, on considère de nouveau des antennes identiques. Les antennes-cadres du lecteur et de la carte constituent les inductances des circuits oscillants accordés d'émission et respectivement de réception d'énergie électromagnétique.

En état d'écoute, le lecteur 10 rayonne par les antennes 11 et 12 une porteuse pure, sans modulation, générée par l'étage oscillateur 23. Les tensions de radiofréquence u4 et u5 présentes aux bornes des antennes sont détectées localement par les diodes 47 et 48 et on obtient deux signaux u4d et u5d, d'amplitudes pratiquement égales s'il n'y a pas une carte sans contacts en proximité. Si une des antennes est couplée avec un circuit accordé externe, par exemple celui d'une carte, la tension détéctée va subir des variations, en fonction de l'impédance du circuit absorbeur et en fonction du couplage mutuel.

Du coté de la carte13, les antennes 14 et 15 captent une partie de l'énergie émise par le lecteur pour alimenter la carte. En modifiant les charges résistives des antennes de la carte, on va modifier implicitement les tensions détectées côté lecteur.

La modulation de charge de l'antenne 14 est obtenue par l'application d'une charge résistive 42 sur le circuit accordé par l'interrupteur 41. Le commutateur 41 est commandé par les données à transmettre. Identiquement, pour l'antenne 15 on utilise la résistance 44 et l'interrupteur 43.

Les deux modes de fonctionnement, normal ou de haute sécurité, sont déterminés par la façon de commander les interrupteurs 41 et 43. Le choix est fait par le commutateur 45.

D'une façon similaire à la transmission lecteur vers carte, on va utiliser pour la transmission carte vers lecteur le «mode commun» ou mode distant, avec les interrupteurs 41 et 43 synchronisés, pour une transmission simultanée et en phase par les deux antennes 14 et 15. Les deux antennes de la carte seront aperçues comme une antenne unique modulée en charge. Du coté lecteur, les données seront récupérées en faisant la somme des tensions détectées - (u4d+u5d). En ce qui concerne la discrétion de la transmission, un simple récepteur de modulation d'amplitude peut intercepter le signal transmis par la carte.

Pour une transmission discrète en mode proche, on va utiliser le «mode différentiel » d'espace limité, avec une commande en contre-temps des interrupteurs 41 et 43. Du coté lecteur, les données seront récupérées en faisant la différence des tensions détectées - (u4d-u5d).

La transmission est plus sûre, dans la mesure où l'écoute distante est impossible ; en effet, le signal résultant n'a plus de modulation provenant de la somme des deux porteuses modulées en opposition de phase.

Bien entendu, la présente invention n'est pas limitée aux exemples et modes de réalisation décrits et représentés, mais elle est susceptible de nombreuses variantes accessibles à l'homme de l'art. On comprend, comme indiqué plus haut, que le lecteur peut être utilisé indépendamment de la carte, et que la carte peut aussi être utilisée dans les lecteurs de l'état de la technique. Il est aussi clair que l'invention n'est pas limitée aux modulations données à titre d'exemple, et que l'on peut utiliser tous les types de modulation possibles.

Dans les exemples des figures, on a considéré pour le lecteur le cas de deux antennes planes voisines ; il est bien entendu possible d'utiliser d'autres configurations, en adaptant en conséquence les signaux utilisés pour piloter les antennes ; l'important est d'assurer en mode distant une interférence constructrice entre les signaux et en mode proche une interférence destructrice entre les signaux. On entend par interférence destructrice une interférence entre les signaux empêchant la mesure de la modulation - mais pas nécessairement de la porteuse, comme dans l'exemple proposé plus haut.. Ainsi, le nombre des antennes peut varier, tout comme leur position relative ou leur forme.

On comprend enfin que la référence dans toute la description à la norme IEC 14443 ne constitue qu'une facilité de langue ; seul importe sur le plan technique le couplage entre les antennes, telle qu'il est décrit en référence à la figure 6, sans que les autres aspects de la norme ne soient nécessaires à la mise en oeuvre de l'invention.

## Revendications

1. Un lecteur (10) de carte sans contacts, présentant au moins deux antennes (11, 12) et un circuit de modulation des antennes **caractérisé en ce que** le circuit de modulation est adapté pour appliquer alternativement:
- un premier mode de modulation dans lequel les modulations des antennes subissent une interférence constructrice en s'éloignant du lecteur, et
- un deuxième mode de modulation dans lequel les modulations des antennes subissent une interférence destructrice en s'éloignant du lecteur.

2. Le lecteur de la revendication 1, **caractérisé en ce que** la modulation est une modulation à deux états, **en ce que** les antennes sont modulées suivant des états distincts dans le premier mode et suivant le même état dans le deuxième mode.

3. Le lecteur de la revendication 1 ou 2, **caractérisé en ce que** la modulation est une modulation d'amplitude.

4. Le lecteur de la revendication 1 ou 2, **caractérisé en ce que** la modulation est une modulation de phase.

5. Le lecteur de l'une des revendications 1 à 4, **caractérisé en ce que** les antennes (11, 12) sont identiques.

6. Le lecteur de l'une des revendications 1 à 5, **caractérisé en ce que** les antennes (11, 12) sont planes et coplanaires.

7. Une carte à circuit intégré (13) pour lecture sans contact, comprenant au moins deux antennes (14, 15) et un circuit de démodulation des antennes, **caractérisé en ce que** le circuit le démodulation est adapté pour effectuer:
- la somme des signaux démodulés de chaque antenne dans un premier mode de démodulation, et
- la différence des signaux démodulés de chaque antenne dans un deuxième mode de démodulation.

8. La carte de la revendication 7, **caractérisée en ce que** le circuit de démodulation comprend pour chaque antenne (14, 15) un démodulateur d'amplitude, de préférence une diode (34, 35).

9. La carte de la revendication 7, **caractérisée en ce que** le circuit de démodulation comprend pour chaque antenne (14, 15) un démodulateur de phase.

10. La carte de la revendication 7, 8 ou 9, **caractérisée en ce que** les antennes (14, 15) sont identiques.

11. Le lecteur de l'une des revendications 7 à 10, **caractérisé en ce que** les antennes (14, 15) sont planes et coplanaires.

12. Un système de communication sans contact, comprenant un lecteur (10) selon l'une des revendications 1 à 6 et au moins une carte (13) selon l'une des revendications 7 à 11.

13. Le système de la revendication 12, **caractérisé en ce que** les antennes (14, 15) de la carte (13) présentent une structure identique à celle des antennes (11, 12) du lecteur (10).

14. Un procédé de transmission sans contact à l'aide de deux antennes (12), lesdites deux antennes faisant partie d'un lecteur de cartes à circuit intégré, **caractérisé en ce qu**'il comprend alternativement:
- la modulation des antennes suivant un premier mode de modulation dans lequel les modulations des antennes subissent une interférence constructrice en s'éloignant du lecteur, et
- la modulation des antennes suivant un deuxième mode de modulation dans lequel les modulations des antennes subissent une interférence destructrice en s'éloignant du lecteur.

15. Le procédé de la revendication 14, **caractérisé en ce que** la modulation est une modulation à deux états, **en ce que** les antennes sont modulées suivant des états distincts dans le premier mode et suivant le même état dans le deuxième mode.

16. Le procédé de la revendication 14 ou 15, **caractérisé en ce que** la modulation est une modulation d'amplitude.

17. Le procédé de la revendication 14 ou 15, **caractérisé en ce que** la modulation est une modulation de phase.

18. Un procédé de réception de signaux modulés à l'aide de deux antennes (14, 15) faisant partie d'une carte à circuit intégré **caractérisé en ce qu**'il comprend:
- la démodulation des signaux de chaque antenne;
- le calcul de la somme des signaux démodulés de chaque antenne;
- le calcul de la différence des signaux démodulés de chaque antenne; et
- la comparaison de la somme des signaux démodulés de chaque antenne et de la différence des signaux démodulés de chaque antenne.

## Claims

1. A non-contact card reader (10), presenting at least two antennas (11, 12) and one antenna modulation circuit **characterized in that** the modulation circuit applies:
- a first modulation mode in which the antenna modulation undergoes constructive interference by moving away from the reader, and
- a second modulation mode in which the antenna modulation undergoes destructive interference by moving away from the reader.

2. The reader from claim 1, **characterized in that** the modulation is two-state modulation, **in that** the antennas are modulated under distinct states in the first mode and under the same state in the second mode.

3. The reader from claim 1 or 2, **characterized in that** the modulation is amplitude modulation.

4. The reader from claim 1 or 2, **characterized in that** the modulation is phase modulation.

5. The reader from one of claims 1 to 4, **characterized in that** the antennas (11, 12) are identical.

6. The reader from one of claims 1 to 5, **characterized in that** the antennas (11, 12) are planar and coplanar.

7. An integrated circuit card (13) for non-contact reading, comprising presenting at least two antennas (14, 15) and one demodulation circuit for the antennas **characterized in that** the demodulation circuit performs:
- the sum of the demodulated signals for each antenna in a first demodulation mode, and
- the difference in the demodulated signals for each antenna in a second demodulation mode.

8. The card from claim 7, **characterized in that** the demodulation circuit comprises an amplitude demodulator, preferably a diode (34, 35), for each antenna (14, 15).

9. The card from claim 7, **characterized in that** the demodulation circuit comprises a phase demodulator for each antenna (14, 15).

10. The card from claim 7, 8 or 9, **characterized in that** the antennas (14, 15) are identical.

11. The reader from one of claims 7 to 10, **characterized in that** the antennas (14, 15) are planar and coplanar.

12. A non-contact communication system, comprising a reader (10) according to one of claims 1 to 6 and at least one card (13) according to one of claims 7 to 11.

13. The system from claim 12, **characterized in that** the antennas (14, 15) from card (13) present a structure that is identical to that of antennas (11, 12) of reader (10).

14. A method of non-contact transmission by using two antennas (12), said two antennas are part of an integrated circuit card reader, **characterized in that** the method alternatively comprises:
- modulation of the antennas under a first mode of modulation in which the antenna modulation undergoes constructive interference by moving away from the reader, and
- modulation of the antennas under a second mode of modulation in which the antenna modulation undergoes destructive interference by moving away from the reader.

15. The method from claim 14, **characterized in that** the modulation is two-state modulation, **in that** the antennas are modulated under distinct states in the first mode and under the same state in the second mode.

16. The method from claim 14 or 15, **characterized in that** the modulation is amplitude modulation.

17. The method from claim 14 or 15, **characterized in that** the modulation is phase modulation.

18. A method for receiving modulated signals by using two antennas (14, 15) that are part of an integrated circuit card **characterized in that** the method comprises:
- demodulation of the signals from each antenna;
- calculation of the sum of the demodulated signals from each antenna;
- calculation of the difference in the demodulated signals from each antenna ; and
- comparison of the sum of the demodulated signals from each antenna with the difference in the demodulated signals from each antenna.

## Patentansprüche

1. Kontaktloses Kartenlesegerät (10), das mindestens zwei Antennen (11, 12) und eine Modulationsschaltung der Antennen aufweist, **dadurch gekennzeichnet, dass** die Modulationsschaltung Folgendes anwendet:
- einen ersten Modulationsmodus, bei dem die Modulationen der Antennen eine konstruktive Interferenz erfahren, während sie sich von dem Lesegerät entfernen, und
- einen zweiten Modulationsmodus, bei dem die Modulationen der Antennen eine zerstörende Interferenz erfahren, während sie sich vom Lesegerät entfernen.

2. Lesegerät nach Anspruch 1, **dadurch gekennzeichnet, dass** die Modulation eine Modulation zu zwei Zuständen ist, **dadurch**, dass die Antennen in dem ersten Modus gemäß getrennten Zuständen und in dem zweiten Modus gemäß dem gleichen Zustand moduliert werden.

3. Lesegerät nach Anspruch 1 oder 2, **dadurch gekennzeichnet, dass** die Modulation eine Amplitudenmodulation ist.

4. Lesegerät nach Anspruch 1 oder 2, **dadurch gekennzeichnet, dass** die Modulation eine Phasenmodulation ist.

5. Lesegerät nach einem der Ansprüche 1 bis 4, **dadurch gekennzeichnet, dass** die Antennen (11, 12) identisch sind.

6. Lesegerät nach einem der Ansprüche 1 bis 5, **dadurch gekennzeichnet, dass** die Antennen (11, 12) eben und koplanar sind.

7. Leiterplatte (13) zum kontaktlosen Lesen, die zumindest zwei Antennen (14, 15) und eine Demodulationsschaltung der Antennen aufweist, **dadurch gekennzeichnet, dass** die Demodulationsschaltung Folgendes ausführt:
- die Summe der von jeder Antenne in einem ersten Demoludationsmodus demodulierten Signale, und
- den Unterschied der von jeder Antenne in einem zweiten Demodulationsmodus demodulierten Signale.

8. Leiterplatte nach Anspruch 7, **dadurch gekennzeichnet, dass** die Demodulationsschaltung für jede Antenne (14, 15) einen Amplitudendemodulator, vorzugsweise eine Diode (34, 35) aufweist.

9. Leiterplatte nach Anspruch 7, **dadurch gekennzeichnet, dass** die Demodulationsschaltung für jede Antenne (14, 15) einen Phasendemodulator aufweist.

10. Leiterplatte 7, 8 oder 9, **dadurch gekennzeichnet, dass** die Antennen (14, 15) identisch sind.

11. Lesegerät nach einem der Ansprüche 7 bis 10, **dadurch gekennzeichnet, dass** die Antennen (14, 15) eben und koplanar sind.

12. Kontaktloses Kommunikationssystem, das ein Lesegerät (10) gemäß einem der Ansprüche 1 bis 6 und mindestens eine Leiterplatte (13) gemäß einem der Ansprüche 7 bis 11 aufweist.

13. Kommunikationssystem nach Anspruch 12, **dadurch gekennzeichnet, dass** die Antennen (14, 15) der Leiterplatte (13) eine identische Struktur wie die der Antennen (11, 12) des Lesegeräts (10) aufweisen.

14. Verfahren zum kontaktlosen Übertragen mit Hilfe von zwei Antennen (12), wobei die zwei Antennen zu einem Kartenlesegerät mit integrierter Schaltung gehören, **dadurch gekennzeichnet, dass** es alternativ Folgendes aufweist:
- das Modulieren der Antennen gemäß einem ersten Modulationsmodus, bei dem die Modulationen der Antennen einer konstruktiven Interferenz unterzogen werden, während sie sich vom Lesegerät entfernen,
- die Modulation der Antennen gemäß einem zweiten Modulationsmodus, bei dem die Modulationen der Antennen eine zerstörende Interferenz erfahren, während sie sich von dem Lesegerät entfernen.

15. Verfahren nach Anspruch 14, **dadurch gekennzeichnet, dass** die Modulation eine Modulation mit zwei Zuständen ist, dass die Antennen in dem ersten Modus gemäß getrennten Zuständen und in dem zweiten Modus gemäß dem gleichen Zustand moduliert werden.

16. Verfahren nach Anspruch 14 oder 15, **dadurch gekennzeichnet, dass** die Modulation eine Amplitudenmodulation ist.

17. Verfahren nach Anspruch 14 oder 15, **dadurch gekennzeichnet, dass** die Modulation eine Phasenmodulation ist.

18. Verfahren zum Empfangen modulierter Signale mit Hilfe von zwei Antennen (14, 15), die zu einer Leiterplatte gehören, **dadurch gekennzeichnet, dass** es Folgendes umfasst:
- die Demodulation der Signale jeder Antenne,
- die Berechnung der Summe der demodulierten Signale jeder Antenne,
- die Berechnung des Unterschieds der demodulierten Signale jeder Antenne, und
- den Vergleich der Summe der demodulierten Signale jeder Antenne und des Unterschieds der demodulierten Signale jeder Antenne.
